# EUROPEAN PATENT APPLICATION

(11) **EP 1 514 885 A1**
(43) Date of publication of application: **16.03.2005**
(21) Application number: 04020591.6
(22) Date of filing: 31.08.2004
(51) Int. Cl.: C08G 18/70, C08G 18/40, C08G 18/48, E02B 5/02

(54) **Geotextile/polyurethane/composite liners based on one-component heterogeneous liquid polyurethane compositions**

(30) Priority: 12.09.2003 US 661993
(71) Applicant: Bayer MaterialScience LLC, Pittsburgh PA 15205 (US)
(72) Inventor: Markusch, Peter H., Sanibel, FL 33957 (US); Güther, Ralf, 51469 Bergisch Gladbach (DE); Sekelik, Thomas L., Carnegie, PA 15106 (US)
(74) Representative: Perchenek, Nils, Dr.

(57) **Abstract**

The present invention relates to geotextile/polyurethane/polyurea and/or geotextile/polyurea composites prepared by soaking geotextiles with one-component heterogeneous liquid polyurethane compositions and subsequently curing by heat or solvent addition to form a geotextile/-polyurethane composite. The inventive composites may find use as liners for canals and ditches for irrigation and wastewater, roof membranes, secondary containment, etc.

## Description

### TECHNICAL FIELD OF THE INVENTION

The present invention relates to geotextile/polyurethane/polyurea and/or geotextile/polyurea composite liners prepared by soaking geotextiles with one-component heterogeneous liquid polyurethane compositions and subsequently curing by heat or solvent addition to form a geotextile/polyurethane/polyurea composite. Geotextile/ polyurethane/polyurea and/or geotextile/polyurea composites of the present invention can be used as liners for canals and ditches for irrigation and wastewater, roof membranes, secondary containment, etc.

### BACKGROUND OF THE INVENTION

In recent years, the management of natural resources has become important in many countries throughout the world. Efforts have been directed both toward the conservation of our resources and toward the elimination of pollution from our environment. Particular emphasis has been placed on waste leakage and water loss.

Losses in the distribution of water using unlined irrigation ditches are estimated at a minimum to be 25 % and in some situations to be more than 50 % depending upon the porosity of the ditch surface and the distance the water is being moved. In most rural areas, ditches are typically formed by excavating the soil to the desired depth and width. The water moves through the ditch in contact with the exposed natural surface. This can be sand, clay, rocks, etc. and, more commonly, mixtures thereof. The porosity will depend upon the proportions of the different components.

The loss of water in unlined irrigation ditches at one time was considered acceptable only because the supply of water exceeded demand. However, as civilization developed and world population increased, more water was required for both greater food production and for the marked increase in non-agriculture uses. In addition to greater domestic uses in sanitation, industry now employs large quantities of water in manufacturing and processing procedures.

This high level of consumption plus the very high cost of developing new water supplies has shifted attention to water conservation. Domestic appliances that use less water have been developed. Also, industry has installed recycling purification systems to reduce water consumption.

Although conservation efforts have reduced water consumption to a degree, water still is in relatively short supply, particularly in recent years with the severe droughts in the United States and other countries. Because the most cost effective conservation opportunities and readily accessible water supplies already have been developed, greater attention must be directed to improving the efficiency of water distribution systems.

Improvements in water distribution have been made. A limited number of ditches and canals have been lined with concrete and/or preformed concrete pipes. Concrete is durable and has a long life when properly used. However, concrete is expensive to place and finish and is damaged by unfavorable temperatures during curing. Also, concrete is subject to frost damage, cracking and heaving which results in leaks.

Processes for forming polyurethane composite liners for canals and ditches and apparatuses to perform such a processes are disclosed, for example, in U.S. Pat. Nos. 4,872,784; 4,955,759; 4,955,760; 5,049,006; 5,062,740; 5,421,677 and 5,607,998.

U.S. Pat. No. 5,421,677 ("the '677 patent") is directed to an improved process of forming a ditch liner. The mixture of the '677 patent is a two component polyurethane resin and one or more fillers in an amount of up to 60 % by weight based upon the total weight of the mixture. The mixture is dispensed on a geotextile, thereby forming a liquid filler containing polyurethane soaked geotextile composite. The liquid polyurethane soaked geotextile composite is then placed over the surface of an area to be lined.

One drawback of the resins used in the patents listed above is the use of reactive resins having at least two components which have to be metered and mixed at the job site using special equipment. Another problem encountered in using reactive resins like polyesters, epoxy resins or polyurethanes is that after mixing the resins have only a limited potlife before they solidify. This allows for only a short time between application on a geotextile and installation. In some resins, i.e., polyurethanes, water has to be carefully excluded to avoid foaming upon reaction with the isocyanate component

For the foregoing reasons, it would be desirable to produce geofabric/polymer composites using a binder composition that does not have these shortcomings.

### SUMMARY OF THE INVENTION

Accordingly, the present invention provides such a geotextile/polyurethane/polyurea and/or geotextile/polyurea composite prepared from one or more geotextiles and a one-component heterogeneous liquid polyurethane composition and also to a process for preparing such composites. The inventive composites can be used as liners for canals and ditches for irrigation and wastewater, roof membranes, secondary containment, etc.

These and other advantages and benefits of the present invention will be apparent from the Detailed Description of the Invention herein below.

### DETAILED DESCRIPTION OF THE INVENTION

The present invention will now be described for purposes of illustration and not limitation. Except in the operating examples, or where otherwise indicated, all numbers expressing quantities, percentages and so forth in the specification are to be understood as being modified in all instances by the term "about."

The present invention provides a geotextile/polyurethane composite with one or more geotextiles substantially impregnated with a one-component heterogeneous liquid polyurethane composition made of an isocyanate groups containing solid dispersed in a liquid isocyanate reactive compound, or a solid isocyanate reactive compound dispersed in a liquid isocyanate, isocyanate adduct, or isocyanate terminated prepolymer, optionally catalysts, viscosity adjusting additives, solvents, surfactants, crosslinking agents, pigments, fillers, and other additives.

The present invention further provides a process of forming a geotextile/polyurethane composite involving the steps of impregnating one or more geotextiles substantially with a one component heterogeneous liquid polyurethane composition made of an isocyanate groups containing solid dispersed in a liquid isocyanate reactive compound, or a solid isocyanate reactive compound dispersed in a liquid isocyanate, isocyanate adduct, or isocyanate terminated prepolymer, optionally catalysts, viscosity adjusting additives, solvents, surfactants, crosslinking agents, pigments, fillers, and other additives, conforming the one or more heterogeneous liquid polyurethane impregnated geotextiles to a surface, and applying heat or a solvent to the heterogeneous liquid polyurethane impregnated geotextile to form a geotextile reinforced polyurethane composite.

The term "geotextile/polyurethane" composite as used herein is meant to include geotextile/polyurethane/polyurea composites and geotextile/polyurea composites. The term "heterogeneous" as used herein means solid particles dispersed in a continuous liquid phase. In a one component heterogeneous liquid polyurethane composition, the dispersed solid will contain functional groups that have the capability to react with functional groups present in the continuous liquid phase.

The ratio of the functional groups in the dispersed solid and the continuous liquid phase may be chosen such that whenever reaction between these two phases occurs, a solid polymer is formed that contains urethane or urea or urethane and urea groups. No, or very little, reaction will occur as long as the two phases (solid and liquid) remain separated, but reaction to form a solid polymer will occur whenever the solid becomes dissolved in the liquid phase. Heat or addition of a suitable solvent may induce this dissolution.

One-component heterogeneous liquid polyurethane compositions are known in the art and are solid isocyanates dispersed in liquid polyols or liquid amino-terminated polyols or solid polyols or amines dispersed in liquid isocyanates, isocyanate adducts, or isocyanate terminated prepolymers. References to both types of heterogeneous liquid polyurethane compositions can be found, e.g., in U.S. Pat. Nos. 5,142,014; 5,138,011; 5,124,447; 3,488,302; 4,390,678; 4,483,974; 4,442280; 4,619,985; 4,667,008; 4,757,105; 5,091,497; 5,091,497 and 5,574,123.

References concerning the technology of using solid polyisocyanates stabilized with amines are given in the proceedings of the FSK/SPI "Polyurethane World Congress 1987", September 29 - October2, 1987, Aachen, Federal Republic of Germany, p.316 - 322 and the "Third Annual International Conference on Crosslinked Polymers", Luzern, Switzerland May 29 - 31, 1989, p.139 - 151.
Examples of suitable solid isocyanates may be found in U.S. Pat. No. 4,483,974, including, but not limited to 1,5-naphtalene diisocyanate, 3,3'-diisocyanato-4,4'-dimethyl-N,N'diphenylurea, dimeric 1-methyl-2,4-diisocyanatobenzene, dimeric 4,4'-diisocyanatodiphenylmethane and 3,3'-dimethyl-4,4'-diisocyanatodiphenyl. Also disclosed are "amine stabilizers" and hydroxyl and/or amino groups containing compounds representing the continuous liquid phase. U.S. Pat. Nos. 4,442280; 4,619,985; 4,667,008; 4,757,105; 5,091,497; 5,091,497 and 5,574,123 disclose solid isocyanates dispersed in liquid hydroxyl and/or amine terminated compounds.

Suitable one-component heterogeneous liquid polyurethane compositions containing a solid isocyanate reactive compound (amine and/ or hydroxyl terminated) dispersed in a liquid isocyanate or phenolic blocked isocyanate phase are disclosed in, e.g., U.S. Pat. Nos. 3,488,302; 4,390,678; 5,142,014; 5,138,011 and 5,124,447.

U.S. Pat. No. 3,488,302 discloses suitable liquid isocyanate terminated prepolymers and solid polyhydroxyl compounds with pentaerithritol and mannitol being the more preferred. The '302 patent requires a molecular ratio of reactive hydrogen to terminal isocyanate groups in the range of 2/1 to 100/1, or higher, a range of 5/1 to 30/1 being preferred. These ambient temperature stable heterogeneous compositions are useful as caulks and sealants and can be applied as ribbons or coatings and by heat curing are firmly bonded to the surfaces. The excess polyol acts as a filler.

U.S. Pat. No. 4,390,678 claims a very similar composition, however, the amount of OH groups in the solid hydroxy compound phase to NCO in the isocyanate terminated prepolymer liquid phase is limited to less than 2:1. These compositions are also stable at ambient temperature and heat cured to form a solid polyurethane polymer.

U.S. Pat. Nos. 5,142,014; 5,138,011 and 5,124,447 use phenolic blocked isocyanates or isocyanate prepolymers as the liquid phase and solid polyamines or polyamine salts as the solid dispersed phase. These compositions are also stable at ambient temperature and can be cured to form solid polyurethane/urea polymers either by heat or the addition of solvents.

Viscosity adjusting additives, surfactants, pigments, fillers and other additives as known in the art may also be added as needed to the one-component heterogeneous liquid polyurethane compositions prior to use to form a geotextile/ polyurethane composite.

As used herein, the term "geotextile" refers to any woven or non-woven porous blanket or mat produced from natural or synthetic fibers. Geotextiles may be made from a variety of synthetic materials such as polypropylene, polyester, nylon, polyvinylchloride and polyethylene or from natural fibers such as jute or cotton. They may be woven using monofilament yarns or slit film, or non-woven needled, heat set, or resin bonded fabrics. Geotextiles are available commercially from numerous manufacturers in the United States. As those skilled in the art are aware, geotextiles are used primarily to line earthen surfaces. Such liners may have secondary uses in lining roofs, ponds, reservoirs, landfills, and underground storage tanks, canals or ditches. As used herein, the terms "ditch" and "canal" are interchangeable and can refer to any liquid-carrying surface.

It is preferred in the present invention that at least one of the geotextiles used in the present invention be thicker, with a "fluffier" texture that can absorb the one-component heterogeneous liquid polyurethane composition like a sponge. One or more geotextiles may be used in combination with the one component heterogeneous liquid polyurethane composition. The ultimate thickness of the geotextile/polymer composite liner may be determined by the choice of geotextiles (number of layers and thickness of the individual layers) as well as the amount of the one-component heterogeneous liquid polyurethane composition applied.

It is preferred to adjust the viscosity of the one-component heterogeneous liquid polyurethane composition to the extent that it will not run off, even on vertical surfaces after being applied to the geotextile substrate.

In the simplest embodiment of the present invention, precut geotextile sheets may preferably be dipped into a bath of the one-component heterogeneous liquid polyurethane composition and the soaked geotextile subsequently applied on the surface to be lined.

One or more geotextiles may also be pulled continuously through a bath of the one-component heterogeneous liquid polyurethane composition, cut to size and placed over the surface to be lined. If a consistent thickness of the composite is desired, the soaked geotextile may preferably be passed through a die or rollers prior to being cut.

In one embodiment of the present invention, the geotextile/ polymer composite liner may be prepared using a machine such as that described in U.S. Pat. No. 5,639,331 ("the '331 patent"). The '331 patent discloses a mobile ditch lining apparatus having reservoirs for supplying raw materials such as resin, catalysts, colors or other additives.

In the simplest version of this embodiment, only one reservoir is necessary to accommodate the one-component heterogeneous liquid polyurethane composition. No mixing chamber is required and the one-component heterogeneous liquid polyurethane composition is directly metered into the vat. If, however, a solvent to cure the composition or any other of the before mentioned additives is metered and mixed continuously with the one-component heterogeneous liquid polyurethane composition, more than one reservoir is desirable.

The geotextiles may be pulled from a vat containing the one-component heterogeneous liquid polyurethane composition through an adjustable die. The opening of the die provides even distribution of the one-component heterogeneous liquid polyurethane composition on the geotextiles, determines how much of the one-component heterogeneous liquid polyurethane composition is dispensed on the geotextile and also controls the thickness of the polymer soaked geotextile composite. The polyurethane soaked geotextile may be cut to the desired length and placed on the area to be lined where it conforms to the surface and preferably cures by heat or the addition of solvents to form a geotextile/polymer composite liner. Installing the one-component heterogeneous liquid polyurethane composition soaked geotextile liners in such a way that they overlap to a certain extent assures that after curing, a seamless permanent flexible composite liner is obtained.

In yet another embodiment of the present invention, the one-component heterogeneous liquid polyurethane composition is spray applied to the geotextile with, for example, commercially available spray equipment.

The one-component heterogeneous liquid polyurethane composition soaked geotextile may be placed on the area to be lined where it conforms to the surface and cures to form a geotextile/polymer composite. The geotextile may also first be cut to size and then placed on the area to be lined and, the one-component heterogeneous liquid polyurethane composition may be sprayed onto it. Preferably, the geotextile with the still liquid one-component heterogeneous liquid polyurethane composition on it is rolled with a roller, such as a paint roller, to allow the one-component heterogeneous liquid polyurethane composition to penetrate through the geotextile to the surface of the area to be lined.

In still another embodiment of the invention, the one-component heterogeneous liquid polyurethane composition may first be sprayed on a broken concrete surface of a concrete lined ditch and a geotextile placed over it so that the geotextile absorbs the still liquid heterogeneous polyurethane composition to form a soaked composite, which is cured to form a solid, yet flexible polyurethane/geotextile composite.

The above-described composition cures in a reasonable amount of time with either externally applied heat or by addition of a suitable solvent.

The thickness of the geotextile/polymer composite may be varied over a wide range, but preferably measures from 40 microns to 500 microns.

The amount of polymer applied to the geotextile(s) may be varied, but preferably the polymer applied per square meter ranges from 0.2 kg to 20 kg, more preferably from 0.5 kg to 5 kg. The amount of polymer applied may be in an amount ranging between any combination of these values, inclusive of the recited values.

If desired, several layers of the one-component heterogeneous liquid polyurethane composition soaked geotextile(s) may be applied over each other to obtain a composite of higher strength and dimensional stability. This is the preferred mode for lining an earthen canal or ditch.

### EXAMPLES:

The present invention is further illustrated, but is not to be limited, by the following examples. The following components were used in the working examples:

### PU Composition A:

A one-component heterogeneous liquid polyurethane composition was prepared according to U.S. Pat. No. 4,483,974 (Example 2) using the following composition:
250 g of linear polypropylene glycol ether, MW=2000
0.15 g of ethylene diamine "amine stabilizer"
43.8 g of dimeric finely particulate tolylene diisocyanate
22.25 g of 2,4-/2,6-diamino-3,5-diethyl toluene isomer mixture (65/35) "DETA"
0.5 g of dimethyltin dilaurate, commercially available as FOMREZ UL-28 from Witco, New York, N.Y. (catalyst replacement for the lead octoate solution used in U.S. Pat. No. 4,483,974 (Example 2)).

### PU Composition B:

A one-component heterogeneous liquid polyurethane composition was prepared according to U.S. Pat. No. 3,488,302 (Example 1). A prepolymer was prepared from:
183.7 g of MONDUR TD-80, toluene diisocyanate containing about 80 percent by weight of the 2,4-isomer and 20 percent of the 2,6-isomer (commercially available from Bayer Polymers LLC) and
1000 g of PPG 2000, a linear polypropylene glycol ether, MW=2000.

This prepolymer was prepared by adding the toluene diisocyanate to the polyol under agitation in a flask under dry nitrogen at 80°C. The reaction time was two (2) hours. The NCO-content was determined to be 3.6 %. After that the material was cooled down to room temperature. The following were added to this prepolymer and agitated until a fine stable suspension was formed.
340 g pentaerythritol (finely ground), and
59.2 g colloidal silica.
The product was stored in a tight container under dry nitrogen.

### Geotextile A:

TYPAR-3301, spunbonded polypropylene, 3 oz/yd², 12 mils thickness (Reemay).

### Geotextile B:

TREVIRA Spunbound Type 1620, polyester, nonwoven, heatbonded, 5.7 oz/yd², 37 mils thickness, (Fluid Systems).

### Example 1

A piece of Geotextile B (one square foot, 24.2 g), burnished side down was placed on a polyethylene sheet. PU Composition A (250 g) was poured on Geotextile B and evenly distributed using a small plastic paint roller. Subsequently, a piece of Geotextile A (one square foot 9.9 g) was placed on top of the coated Geotextile B and rolled with the paint roller until the liquid composition had soaked through the upper sheet. The sample was then postcured at 150°C for two (2) hours. The resulting geotextile/polyurethane composite had the physical properties summarized below in Table I.

**Table I**

| **Property (Test)** | |
|---|---|
| Tensile Strength (ASTM D 412) | 1034 psi |
| Elongation (ASTM D 412) | 112 % |
| Tear Strength (ASTM D 3489) | 152 pli |
| Die"C" Tear Resistance (ASTM D 624) | 518 pli |
| Water Absorption (ASTM D 570-98) 168 hours | 5.06 % |

### Example 2

A piece of Geotextile B (one square foot 24.2 g,) burnished side down was placed on a polyethylene sheet. PU Composition B (250 g) was poured on Geotextile B and evenly distributed using a small plastic paint roller. Subsequently, a one (1) square foot piece of Geotextile A (9.9 g) was placed on top of the coated Geotextile B and rolled, with the paint roller, until the liquid composition had soaked through the upper sheet. The sample was then postcured at 150°C for two (2) hours. The resulting geotextile/polyurethane composite had the physical properties summarized below in Table II.

**Table II**

| **Property (Test)** | |
|---|---|
| Tensile Strength (ASTM D 412) | 930 psi |
| Elongation (ASTM D 412) | 112 % |
| Tear Strength (ASTM D 3489) | 209 pli |
| Die"C" Tear Resistance (ASTM D 624) | 344 pli |
| Water Absorption (ASTM D 570-98) 168 hours | 6.21 % |

Although the invention has been described in detail in the foregoing for the purpose of illustration, it is to be understood that such detail is solely for that purpose and that variations can be made therein by those skilled in the art without departing from the spirit and scope of the invention. The scope of the invention is to be measured by the appended claims.

## Claims

1. A geotextile/polyurethane composite comprising:
one or more geotextiles substantially impregnated with a one-component heterogeneous liquid polyurethane composition comprising,
i) an isocyanate groups containing solid dispersed in a liquid isocyanate reactive compound,
or
ii) a solid isocyanate reactive compound dispersed in a liquid isocyanate, isocyanate adduct, or isocyanate terminated prepolymer,
optionally catalysts, viscosity adjusting additives, solvents, surfactants, crosslinking agents, pigments, fillers, and other additives.

2. A liner for irrigation canals and ditches comprising the geotextile/polyurethane composite according to Claim 1.

3. The geotextile/polyurethane composite according to Claim 1 having an elongation of at least about 5 % and a tensile strength of at least about 200 psi.

4. The geotextile/polyurethane composite according to Claim 1, wherein the water absorption is less than about 10 % by weight.

5. The geotextile/polyurethane composite according to Claim 1, wherein the one or more geotextiles includes at least one thicker, more sponge-like geotextile.

6. The geotextile/polyurethane composite according to Claim 1, wherein the one or more geotextiles are substantially impregnated with the one-component heterogeneous liquid polyurethane composition such that the amount of polymer present in the composite ranges from about 0.2 kg to about 20 kg of polymer per square meter of geotextile.

7. The geotextile/polyurethane composite according to Claim 1, wherein the one or more geotextiles are impregnated with the one-component heterogeneous liquid polyurethane composition such that the amount of polymer present in the composite ranges from about 0.5 kg to about 5 kg of polymer per square meter of geotextile.

8. The geotextile/polyurethane composite according to Claim 1 having a thickness of from about 40 microns to about 500 microns.

9. A process of forming a geotextile/polyurethane composite comprising the steps of:
impregnating one or more geotextiles substantially with a one component heterogeneous liquid polyurethane composition comprising,
i) an isocyanate groups containing solid dispersed in a liquid isocyanate reactive compound,
or
ii) a solid isocyanate reactive compound dispersed in a liquid isocyanate, isocyanate adduct, or isocyanate terminated prepolymer,
optionally catalysts, viscosity adjusting additives, solvents, surfactants, crosslinking agents, pigments, fillers, and other additives;
conforming the one or more heterogeneous liquid polyurethane impregnated geotextiles to a surface; and
applying heat or a solvent to the heterogeneous liquid polyurethane impregnated geotextile to form a geotextile reinforced polyurethane/polyurea composite.

10. The process according to Claim 9, wherein the composite is a liner for irrigation canals and/or ditches.

11. The process according to Claim 9, wherein the composite has an elongation of at least about 5 % and a tensile strength of at least about 200 psi.

12. The process according to Claim 9, wherein the one or more geotextiles includes at least one thicker, more sponge-like geotextile.

13. The process according to Claim 9, wherein the one or more geotextiles are impregnated with the one-component heterogeneous liquid polyurethane composition such that the amount of polymer present in the composite ranges from about 1 kg to about 20 kg of polymer per square meter of geotextile.

14. The process according to Claim 9, wherein the one or more geotextiles are impregnated with the one-component heterogeneous liquid polyurethane composition that the amount of polymer present in the composite ranges from about 2 kg to about 5 kg of polymer per square meter of geotextile.

15. The process according to Claim 9, wherein the composite has a thickness of from about 40 microns to about 500 microns.

16. In a process of lining canals and ditches, the improvement comprising including the composite according to Claim 1.

17. In a process of lining canals and ditches, the improvement comprising including the composite made by the process according to Claim 9.
